(19) **Europäisches Patentamt**

**European Patent Office**

**Office européen des brevets**

(11) **EP 1 344 808 B1**

(12) **EUROPÄISCHE PATENTSCHRIFT**

(45) Veröffentlichungstag und Bekanntmachung des Hinweises auf die Patenterteilung:
**16.11.2005 Patentblatt 2005/46**

(51) Int Cl.$^7$: **C09J 7/02**

(21) Anmeldenummer: **03003977.0**

(22) Anmeldetag: **22.02.2003**

(54) **Verfahren zur Herstellung von Klebebändern mittels strahlenchemischer Vernetzung sowie Verwendung der Klebebänder**

Method for producing adhesive tapes by radiation-chemical crosslinking and use of the adhesive tapes

Procédé de fabrication de rubans adhésifs par réticulation à l'aide de radiations et utilisation de ces rubans adhésifs

(84) Benannte Vertragsstaaten:
**DE ES FR GB IT**

(30) Priorität: **13.03.2002 DE 10211020**

(43) Veröffentlichungstag der Anmeldung:
**17.09.2003 Patentblatt 2003/38**

(73) Patentinhaber: **tesa AG**
**20253 Hamburg (DE)**

(72) Erfinder: **Grittner, Norbert, Dr.**
**22527 Hamburg (DE)**

(56) Entgegenhaltungen:
**EP-A- 0 453 254        EP-A- 0 994 169**
**US-A- 5 194 455**

# EP 1 344 808 B1

## Beschreibung

Die Erfindung betrifft ein Verfahren zur Herstellung von Klebebändern, wobei mit einer Klebmasse beschichtete Klebebänder einer strahlenchemischen Vernetzung unterworfen werden, sowie deren Verwendung.

Die Vernetzung von Haftklebemassen durch Elektronenstrahlung ist seit langem Stand der Technik. Ziel dieser Bestrahlung war es bislang, die Scherfestigkeit und die Kohäsion der zu vernetzenden Haftklebemassen so weit zu erhöhen, daß ein Abgleiten bei Scherbeanspruchung oder Rückstandsbildung beim Entfernen vom Untergrund verhindert wurde. Dabei ist besonders zu berücksichtigen, daß im Gegensatz zur thermischen, meist durch Schwefelspender oder Phenolharzsysteme bewirkten Vernetzung die Elektronenstrahlvernetzung nicht gleichmäßig über die gesamte Dicke der Haftklebemasse erfolgt, sondern ein ausgeprägtes Tiefenprofil zeigt.

Dieses Tiefenprofil ist bekannt und wird zum Beispiel in US 4,246,297 A1 für Haftklebemassen beschrieben. Sie zeigt eine Bevorzugung der oberflächennahen Bereiche der Haftklebeschicht, wohingegen die tieferen Schichten im allgemeinen schwächer vernetzt sind. Dieser Sachverhalt wird genutzt, um strahlungsempfindliche Trägermaterialien wie Gewebe oder Trennpapiere zu schonen bei gleichzeitig guter Vernetzung der darauf aufgebrachten Schichten wie zum Beispiel Kaschierkleber oder Kunststoffbeschichtungen.

Angewandt auf Haftklebebänder führt dies jedoch im allgemeinen, wie in EP 0 453 254 A1 dargelegt, zu unakzeptablen klebtechnischen Eigenschaften der Produkte, denn sie neigen damit unter Scherbelastung zum Abscheren auf der tieferliegenden, schwach vernetzten Schicht der Haftklebemasse oder sogar zum kohäsiven Spalten an dieser Stelle, wenn das Klebeband vom Untergrund entfernt wird, so daß unerwünschte Rückstände auf dem Untergrund verbleiben.

Aus diesem Grund beschreibt EP 0 453 254 A1 eine Elektronenstrahl-Vernetzung in der Art, daß der Dosisabfall zwischen äußerer Oberfläche der Haftklebemasse und ihrer Grenzfläche zum Trägermaterial hin kleiner als 40 % der Oberflächendosis betragen soll. Damit ist eine gleichmäßige Tiefenvernetzung sichergestellt, die dort als für Haftklebebänder unverzichtbar beschrieben ist.

In der Veröffentlichung "Druckfarben und Lacktrocknung mit 100 kV-Elektronenstrahlen" (Schiller, Panzer, Seyfert, Röder, Papier- und Kunststoff Verarbeiter 8/1996) werden ein Gerät und ein Verfahren zur Elektronenstrahl-Vernetzung von Beschichtungen beschrieben, die sich durch besonders niedrige Beschleunigungsspannungen und damit eine geringe Eindringtiefe der Elektronen in das Substrat auszeichnen. Die Veröffentlichung bezieht sich jedoch ausschließlich auf Anwendungen zur Trocknung von Druckfarben. Die besonderen Erfordernisse von Haftklebstoffen und ihrer Anwendung werden nicht berücksichtigt.

Aus DE 198 46 901 A1 ist ein Verfahren zur strahlenchemischen Vernetzung von einseitig mit einer Klebmasse beschichteten Klebebändern bekannt, wobei die Bestrahlung des Klebebands durch das Trägermaterial des Klebebands auf die Klebmasse derartig erfolgt, daß das Trägermaterial und die dem Trägermaterial zugewandte Klebmasseseite eine Dosis von 30 bis 200 kGy, insbesondere 50 bis 150 kGy, ganz besonders 100 kGy, erhalten, und wobei die Beschleunigungsspannung während der Bestrahlung so gewählt wird, daß die Dosis auf der offenen Klebmasseseite auf 0 bis 60 kGy, insbesondere auf 0 bis 50 kGy, ganz besonders auf 10 bis 20 kGy, abgesunken ist.

Aus der DE 198 46 902 A1 ist ein Verfahren zur strahlenchemischen Vernetzung von doppelseitigen Klebebändern bekannt, wobei ein beidseitig mit Klebern beschichtetes Trägermaterial in einer Bestrahlungsvorrichtung von beiden Seiten mit unterschiedlichen Dosen asymmetrisch bestrahlt wird.

In einer vorteilhaften Ausführungsform besteht das Verfahren zur strahlenchemischen Vernetzung von doppelseitigen Klebebändern aus den Verfahrensschritten:

   a) Beschichten eines Trägermaterials mit einem Kleber A,
   b) ES-Vernetzung des Teilproduktes Kleber A/Träger auf der Masseseite mit einer an der ES-Anlage eingestellten Dosis A und Beschleunigungsspannung A,
   c) Eindecken des Klebers A mit einem Releaseliner,
   d) Beschichten der zweiten Seite des Trägermaterials mit dem Kleber B und
   e) ES-Bestrahlung des Verbundes auf die offene Seite der Klebmasse B mit einer an der ES-Anlage eingestellten Dosis B und Beschleunigungsspannung B, wobei die Seite mit dem Releaseliner vorzugsweise auf einer Kühlwalze durch die Elektronenbestrahlung geführt wird und wobei die Dosis A und die Dosis B und/oder die Beschleunigungsspannung A und die Beschleunigungsspannung B unterschiedliche Werte aufweisen.

Dazu wird zunächst im Falle der ES-Vernetzung die an der ES-Anlage einzustellende Beschleunigungsspannung und Dosis für die zweite Bestrahlung abhängig von den Einzeldicken der Verbundschichten, bei Gesamtdosen bis 80 kGy und mehr in den Masseschichten, vorzugsweise mit Hilfe eines Computerprogramms so berechnet, daß die

   a) Dosis auf der offenen Seite des Releaseliners kleiner 40 kGy, vorzugsweise kleiner 10 kGy, bleibt,
   b) Dosis in der Grenzschicht Releaseliner/Klebmasse A kleiner 50 kGy, vorzugsweise kleiner 15 kGy, bleibt,

c) Oberflächendosis in der Klebmasse B kleiner (Solldosis + 25 %), vorzugsweise kleiner (Solldosis + 15 %), bleibt und

d) Dosis in der Grenzschicht Träger/Klebmasse B größer (Solldosis - 25 %), vorzugsweise größer (Solldosis - 15 %), bleibt,

e) während andererseits der Dosisabfall in der Klebmasse B zum Träger hin 45 %, vorzugsweise 25 %, der Solldosis nicht übersteigt.

Ebenso sind die grundsätzlichen Möglichkeiten zur Strahlenvernetzung von Kautschukmassen bekannt. In US 2,956,904 A1 ist dargelegt, daß Klebemassen auf Basis von Polydienkautschuken/Harzen, Poly(vinylethern), Polyacrylaten und Poly(dimethylsiloxanen) durch Einwirkung energiereicher Strahlung vernetzt werden können, bevorzugt finden dazu beschleunigte Elektronen Verwendung. Dadurch wird die Kohäsion erhöht, was zu einer Verlängerung der Scherstandzeiten insbesondere bei erhöhten Temperaturen führt. Im Gegensatz zur thermischen Vernetzung mit reaktiven Phenolformaldehydharzen werden dabei die Klebkräfte (Schälfestigkeiten) nicht oder nur sehr gering reduziert.

Die Wirksamkeit der Strahlenvernetzung ist allerdings vom Molekulargewicht des Kautschuks abhängig. Mit zunehmendem Abbau des Kautschuks fällt die Verrietzungsausbeute stark ab. Zur Erreichung des gleichen Vernetzungsgrads sind daher immer höhere Strahlendosen erforderlich. Solch ein Abbau ist aber notwendig, wenn die Klebemassen lösungsmittelfrei als Hot-Melts oder mit geringen Zusätzen von Lösungsmitteln als High Solids verarbeitet werden sollen, da anderenfalls die Viskosität für die Verarbeitung zu hoch wäre.

Der Abbau erfolgt üblicherweise bereits bei der Herstellung der Klebmassen unter Einwirkung der Scherkräfte im Mischer oder Mischextruder. Er kann durch Einführung von Luftsauerstoff wesentlich verstärkt werden. WO 94/11175 A1 und WO 95/25774 A1 beschreiben ein Herstellungsverfahren, bei dem einer erhöhter Abbau nicht-thermoplastischer Elastomere aufgrund einer Sauerstoffeinwirkung während des Herstellungsprozesses zu erwarten ist.

Um bei Klebemassen mit stark abgebauten Kautschuken die gleichen Scherstandzeiten wie bei Lösungsmittelmassen mit schwach abgebautem Kautschuk zu erreichen, sind Strahlendosen von 100 bis 200 kGy erforderlich. So hohe Strahlendosen erfordern sehr leistungsfähige, aufwendige Beschleunigeranlagen und können unter Umständen die mechanischen Eigenschaften wichtiger Träger wie Papier, OPP (orientiertes Polypropylen) oder PVC wesentlich verschlechtern.

Diese Trägerschäden können nur unter günstigen Umständen, beispielsweise wenn bestimmte Mindestdicken für Klebmasse und Träger gegeben sind, durch Reduzierung der Beschleunigungsspannung und folglich damit der Eindringtiefe der Strahlung verringert oder vermieden werden.

Des weiteren sind eine Reihe von Stoffen bekannt, die zur Steigerung der Vernetzung eingesetzt werden.

In DE 23 50 030 A1 und DE 24 55 133 A1 werden mehrfunktionelle Acrylate zur Erhöhung der Vernetzung von druckempfindlichen Hot-Melts auf Basis von EVAc und Acrylatcopolymeren beschrieben, in US 4,133,731 A1 solche auf Basis von SIS- und SBS-Blockcopolymeren. Die Zusätze belaufen sich auf eine Größenordnung von 5 Gew.- % bis 20 Gew.- %.

Die bekannten Vernetzer wie Triallylcyanurat (TAC) und Bismalimid, das auch in WO 94/11175 A1 und WO 95/25774 A1 eingesetzt wird, sind zur Erhöhung der Vemetzungsausbeute von Klebemassen auf Basis von nichtthermoplastischen Dien-Kautschuken wie Naturkautschuke (NR), synthetische Poly-isoprenkautschuke (IR) und statistische Styrol-butadienkautschuke (SBR) in Kombination mit Klebharzen wesentlich weniger wirksam. Trifunktionelle Merkaptane, die zur Vernetzung von SIS- und SBS-Blockcopolymeren eingesetzt werden (siehe WO 88/81281 A1), erzielen zwar auch eine ausreichende Vernetzung in diesen Kautschukmassen, sie verbreiten jedoch insbesondere bei der Erhitzung von Hot-Melts einen sehr unangenehmen Geruch, der als sehr störend empfunden werden kann.

Weiterhin ist bekannt, daß bei Acrylaten zur Einstellung spezieller Klebeigenschaften ein Vernetzungsschritt erforderlich ist.

Weiterhin ist bekannt, daß sich mit zunehmender Vernetzung die Löslichkeit von Kautschuken und Acrylaten in organischen Lösungsmitteln verringert.

Verbunden mit der Verbesserung der Kohäsion und der Lösungsmittelbeständigkeit nach Elektronenstrahlvernetzung (ES-Vernetzung) ist jedoch häufig ein deutliches Absinken von Klebkraft und Tack.

Das Dosistiefenprofil in einem an einer Elektronenstrahlanlagen bestrahlten Produkt ist für gegebene Beschleunigungsspannungen bekannt. Von verschiedenen Autoren wurden empirische Funktionen zu deren Beschreibung entwickelt (siehe zum Beispiel Heger, beta-gamma 1, 20,1990 oder Neuhaus-Steinmetz, RadTech Europe, Mediterraneo, 1993).

Als Grundlage der Berechnung für die Strahlendosis wird zum Beispiel folgende empirische Formel verwendet, die von Neuhaus-Steinmetz auf der RadTech Europe, Mediterraneo 1993, veröffentlicht worden ist.

$$D[\%] = \frac{\exp\left\{-\left(\frac{18,8 * X}{(U_B)^{1,57}} - 0,7\right)^2\right\}}{1 + \left(\frac{9,7 * X}{(U_B)^{1,57}}\right)^{15}}$$

mit

D      Dosis in %

$U_B$      Beschleunigungsspannung in kV

X      durchstrahltes Flächengewicht in $g/m^2$, bestehend aus Flächengewicht des Vakuumfensters , Luftspalt zwischen Vakuumfenster und Produkt und Tiefe im Produkt

Für Produkte, die aus einer zu bestrahlenden Beschichtung, die auch ein Haftkleber sein kann, und einem strahlendegradierbaren Träger bestehen, ist eine Optimierung der Beschleunigungsspannung bekannt. Hierbei erhält der Träger eine deutlich geringere mittlere Dosis als die Beschichtung, während sich der Dosisabfall in der Beschichtung noch in einem zulässigen Rahmen für eine gleichmäßige Vernetzung bewegt (Karmann, 7. Münchener Klebstoff- und Veredlungsseminar, 1982; EP 0 453 254 A1).

Aufgabe der Erfindung ist es, ein Verfahren zu schaffen, das während der Elektronenstrahlvernetzung eines mit einer Haftklebmasse beschichteten Trägermaterials die Schädigung der Klebemasse und des Trägermaterials reduziert, ohne daß die Qualität des Klebebands sich durch unzureichende Vernetzung von Teilen der Haftklebemasse vermindert, und das die Nachteile des Standes der Technik nicht oder zumindest nicht in diesem Maße aufweist.

Gelöst wird diese Aufgabe durch ein Verfahren, wie es im Hauptanspruch näher gekennzeichnet ist. In den Unteransprüchen sind vorteilhafte Ausführungsformen des Verfahrens beschrieben. Weiterhin vom Erfindungsgedanken umfaßt sind nach dem erfindungsgemäßen Verfahren hergestellte Klebebänder sowie die Verwendung dieser Klebebänder.

Demgemäß betrifft die Erfindung ein Verfahren zur Herstellung von Klebebändern, wobei ein mit einer Klebmasse beschichtetes Klebeband einer strahlenchemischen Vernetzung, insbesondere Elektronenstrahlvernetzung, unterworfen wird, indem die Bestrahlung derartig erfolgt, daß die Bestrahlung von der mit Haftklebemasse beschichteten Seite aus erfolgt, wobei die Beschleunigungsspannung während der Bestrahlung so gewählt wird, daß der Wert des Dosisabfalls zwischen der der Strahlungsquelle zugekehrten Oberfläche der Klebemasse und der ihr abgekehrten Oberfläche größer ist als 40 % des Wertes der Dosis, die an der der Strahlungsquelle zugekehrten Oberfläche der Klebemasse einstrahlt.

In vorteilhaften Ausführungsformen des Klebebands ist auf der nicht mit der Klebemasse beschichteten Seite des Trägermaterials eine Trennlackbeschichtung aufgebracht und/oder zwischen der Klebemasse und dem Trägermaterial ein Primer.

Weiterhin vorzugsweise ist auf der zweiten Seite des Trägermaterials ebenfalls eine Klebemasse aufgetragen.

Die Klebmassen bestehen vorzugsweise aus mindestens einem insbesondere durch Elektronenstrahlen vernetzbaren Elastomer wie Acrylaten, Silikonelastomeren, Naturkautschuksystemen, Styrolblockcopolymeren wie Styrol-Butadien-Styrol, Styrol-Isopren-Styrol oder Styrol-Ethylen-Butylen-Styrol, gegebenenfalls in Kombination mit Takkifiern aus Lösung, Dispersion oder als Hotmelt.

Weiter vorzugsweise sind der Klebemasse mindestens ein Klebharz, Füllstoffe und/oder weitere Hilfsstoffen wie Antioxidantien, Weichmachern oder Vernetzungshilfsmittel zugesetzt.

Die Klebmassen können des weiteren gefüllt, gefärbt und/oder geschäumt sein.

Vorteilhafterweise ist das Elastomer gewählt aus der Gruppe der Naturkautschuke oder der Synthesekautschuke oder es besteht aus einem beliebigen Blend aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Elastomeren zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.

Stellvertretend genannt seien an dieser Stelle vor allem die besonders verträglichen Styrol-Isopren-Styrol (SIS)- und Styrol-Butadien-Styrol (SBS)-Typen.

Als Klebemasse kommen außerdem niedermolekulare Acrylathotmelts in Frage, nämlich Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern.

Die Acrylathotmelts können des weiteren mit einem oder mehreren Additiven wie Alterungsschutzmitteln, Vernetzern, Lichtschutzmitteln, Ozonschutzmitteln, Fettsäuren, Harzen, Weichmachern und Beschleunigern abgemischt sein.

Als klebrigmachende Harze sind ausnahmslos alle vorbekannten und in der Literatur beschriebenen Klebharze einsetzbar. Genannt seien stellvertretend die Siliconharze, Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der-resultierenden Klebmasse wunschgemäß einzustellen. Auf die Darstellung des Wissensstandes im "Handbook of Pressure Sensitive Adhesive Technology" von Donatas Satas (van Nostrand, 1999) sei ausdrücklich hingewiesen.

Kohlenwasserstoffharz ist eine Sammelbezeichnung für thermoplastische, farblose bis intensiv braun gefärbte Polymere mit einer Molmasse von im allgemeinen etwa 2000 bis 4000.

Sie lassen sich nach ihrer Provenienz in drei große Gruppen einteilen: In Petroleum-, Kohlenteer- und Terpenharze. Die wichtigsten Kohlenteerharze sind die Cumaron-Inden-Harze. Die Kohlenwasserstoffharze werden durch Polymerisation der aus den Rohstoffen isolierbaren ungesättigten Verbindungen gewonnen.

Zu den Kohlenwasserstoffharze werden auch durch Polymerisation von Monomeren wie Styrol beziehungsweise durch Polykondensationen (bestimmte Formaldehyd-Harze) zugängliche Polymere mit entsprechend niedriger Molmasse gerechnet. Kohlenwasserstoffharze sind Produkte mit in weiten Grenzen von <0 °C (bei 20 °C flüssige Kohlenwasserstoffharze) bis >200 °C variierendem Erweichungsbereich und einer Dichte von ca. 0,9 bis 1,2 g/cm$^3$.

Sie sind löslich in organischen Lösungsmitteln wie Ethern, Estern, Ketonen und chlorierten Kohlenwasserstoffen, unlöslich in Alkoholen und Wasser.

Unter Kolophoniumharz wird ein natürliches Harz verstanden, das aus dem Rohharz von Koniferen gewonnen wird. Man unterscheidet drei Kolophonium-Typen: Balsamharz als Destillationsrückstand von Terpentinöl, Wurzelharz als Extrakt von Koniferen-Wurzelstöcken und Tallharz, der Destillationsrückstand von Tallöl. Die mengenmäßig größte Bedeutung hat Balsamharz.

Kolophonium ist ein sprödes, transparentes Produkt von roter bis brauner Farbe. Es ist wasserunlöslich, löslich dagegen in vielen organischen Lösungsmitteln wie (chlorierten) aliphatischen und aromatischen Kohlenwasserstoffen, Estern, Ethern und Ketonen sowie in pflanzlichen und mineralischen Ölen. Der Erweichungspunkt von Kolophonium liegt im Bereich von ca. 70 bis 80 °C.

Kolophonium ist ein Gemisch aus ca. 90 % Harzsäuren und 10 % Neutral-Stoffen (Fettsäureester, Terpenalkohole und Kohlenwasserstoffe). Die wichtigsten Kolophonium-Harzsäuren sind ungesättigte Carbonsäuren der Bruttoformel C20H30O2, Abietin-, Neoabietin-, Lävopimar-, Pimar-, Isopimar-, und Palustrinsäure, neben hydrierter und dehydrierter Abietinsäure.

Die Mengenverhältnisse dieser Säuren variieren in Abhängigkeit von der Provenienz des Kolophoniums.

Als Weichmacher können alle aus der Klebebandtechnologie bekannten weichmachenden Substanzen eingesetzt werden. Dazu zählen unter anderem die paraffinischen und naphthenischen Öle, (funktionalisierte) Oligomere wie Oligobutadiene, -isoprene, flüssige Nitrilkautschuke, flüssige Terpenharze, pflanzliche und tierische Öle und Fette, Phthalate, funktionalisierte Acrylate.

Zum Zwecke der zusätzlich zur Elektronenstrahlvernetzung einsetzbaren thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100°C bis 160 °C, ganz besonders bevorzugt bei Temperaturen von 110 °C bis 140 °C.

Die thermische Anregung der Vernetzer kann auch durch IR-Strahlen oder hochenergetische Wechselfelder erfolgen.

Füllstoffe sind zum Beispiel Kreide, Zinkoxide, Silikate oder andere Mineralien, wie sie allgemein auf dem Gebiet der Haftklebstoffe bekannt sind.

Die Klebemassen werden mit einem bekannten Verfahren, beispielsweise mittels eines Rakels, mit oder ohne Anwendung von Lösemitteln oder als Dispersion, auf die Trägermaterialien beschichtet und gegebenenfalls getrocknet, wobei die Klebemasse in einer hervorragenden Ausgestaltung der Erfindung mit einem Flächengewicht von 10 bis 200 g/m$^2$, bevorzugt von 30 bis 120 g/m$^2$ und ganz bevorzugt von 30 bis 60 g/m$^2$, auf das Trägermaterial aufgetragen ist.

Als Trägermaterialien eignen sich alle bekannten Träger, insbesondere Laminate, geschäumte und ungeschäumte Folien und/oder Spinnvliese oder Vliese auf Basis Polyethylen, Polypropylen, mono- oder biaxial orientiertes Polypropylen, Polyester, PA, PVC oder anderen üblichen Copolymeren oder cellulosehaltiger Materialien wie gekreppte und ungekreppte Papiere oder Zellwoll- beziehungsweise Baumwollgewebe, -gewirke, -vliese, bahnförmige Schaumstoffe, beispielsweise aus Polyethylen und Polyurethan, alle gegebenenfalls mit entsprechender chemischer oder physikalischer Oberflächenvorbehandlung der Streichseite sowie antiadhäsiver physikalischer Behandlung oder Beschichtung der Rückseite.

Weiter vorzugsweise ist das bahnförmige Trägermaterial ein beidseitig antiadhäsiv beschichtetes Material wie ein Trennpapier oder eine Trennfolie.

Das Trägermaterial weist dabei ein Flächengewicht von 12 bis 250 g/m$^2$ und mehr, vorzugsweise 12 bis 150 g/m$^2$ und ganz besonders bevorzugt von 12 bis 100 g/m$^2$, auf.

Als Trägermaterial für das Klebeband werden außerdem textile Träger wie Gewebe, Gewirke oder Vliese verwendet, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden.

Derartige Abstandsgewebe werden in der EP 0 071 212 B1 offenbart Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.

Die durch die Partikelschicht hindurchgenadelten Haltefasern halten die Deckschicht und die Unterlagsschicht in einem Abstand voneinander und sie sind mit der Deckschicht und der Unterlagsschicht verbunden.

Abstandsgewebe oder -gewirke sind u. a. in zwei Artikeln beschrieben, und zwar einem Artikel aus der Fachzeitschrift "kettenwirk-praxis 3/93", 1993, Seiten 59 bis 63

"Raschelgewirkte Abstandsgewirke" und einem Artikel aus der Fachzeitschrift "kettenwirk-praxis 1/94", 1994, Seiten 73 bis 76

"Raschelgewirkte Abstandsgewirke" auf deren Inhalt hiermit Bezug genommen wird und deren Inhalt Teil dieser Offenbarung und Erfindung wird.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozeßführung ausschließlich oder zumindest überwiegend auf Faserknotenpunkte beschränken, so daß unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs Malivlies" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.

Als Träger kann weiterhin ein Vlies vom Typ Kunitvlies oder Multiknitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multiknitvlies ist gegenüber dem Kunitvlies dadurch gekennzeichnet, daß das Vlies durch das beidseitige Durchstechen mit Nadeln sowohl auf der Ober- als auch auf der Unterseite eine Verfestigung erfährt.

Schließlich sind auch Nähvliese als Vorprodukt geeignet, das Trägermaterial zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Weiterhin besonders vorteilhaft ist ein Stapelfaservlies, das im ersten Schritt durch mechanische Bearbeitung vorverfestigt wird oder das ein Naßvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.

Ein derartiges Vlies ist dadurch gekennzeichnet, daß die Fasern naß gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.

Die Verfestigung des Vliesträgers läßt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.

Für die erfindungsgemäße Nutzung von Vliesen ist besonders die adhäsive Verfestigung von mechanisch vorverfestigten oder naßgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemittel oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.

Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleibt, kann eine unerwünschte Verhärtung und Versteifung des Vlieses weitgehend verhindert werden.

Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozeßschritt erfolgen, wobei dieser inline oder off-line durchgeführt werden kann. Nach der Bindemittelzugabe muß temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen. Für die spätere Endanwendung ist es sinnvoll, aber nicht zwingend notwendig, daß das Bindemittel nach Ende des Vlies-Herstellprozesses seine Klebrigkeit verloren hat. Vorteilhaft ist, daß durch thermische Behandlung flüchtige Komponenten wie Faserhilfsstoffe entfernt werden und somit ein Vlies mit günstigen Foggingwerten entsteht, so daß bei Einsatz einer foggingarmen Klebemasse ein Klebeband mit besonders günstigen Foggingwerten produziert werden kann.

Eine weitere Sonderform der adhäsiven Verfestigung besteht darin, daß die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Maschenwaren sind textile Flächengebilde hergestellt aus einem oder mehreren Fäden oder Fadensystemen durch Maschenbildung (Fadenschleifen), im Unterschied zu Webwaren (Geweben), bei der die Fläche durch Verkreuzen von zwei Fadensystemen (Kett- und Schußfäden) hergestellt wird und den Vliesen (Faserverbundstoffen), bei denen ein loser Faserflor durch Wärme, Nadelung, Nähen oder durch Wasserstrahlen verfestigt wird.

Maschenwaren lassen sich in Gestricke, bei denen die Fäden in Querrichtung durch das Textil laufen, und in Gewirke einteilen, bei denen die Fäden längs durch das Textil laufen. Maschenwaren sind durch ihre Maschenstruktur prinzipiell nachgiebige, anschmiegsame Textilien, weil sich die Maschen in Länge und Breite dehnen können und das Bestreben haben, in ihre Ausgangslage zurückzukehren. Sie sind bei hochwertigem Material sehr strapazierfähig.

Als Ausgangsmaterialien für den textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des textilen Trägers eingesetzt werden.

Eine Schwerentflammbarkeit der Klebebänder läßt sich erzielen, indem dem Trägermaterial und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Sollte das Klebeband in der bevorzugten Verwendung als Abdeckklebeband eingesetzt sein, ist das Trägermaterial insbesondere ein dehnfähiger bahnförmiger Papierträger. Insbesondere die Dehnbarkeit ist eine unverzichtbare Eigenschaft von Abdeckklebebändern. Denn sie ermöglicht erst die vollflächige und faltenfreie Verklebung in Kurven und auf sphärischen Oberflächen, wie sie zum Beispiel bei der Reparaturlackierung von Pkws notwendig ist; das Abdeckklebeband kann bei der Handapplikation weichen Konturen perfekt nachgeführt werden und führt so zu einer sauberen, unterläuferfreien Farbkante. Die dafür erforderliche Dehnung liegt bei sogenannten Flachkrepps im Bereich von 10 %, bei sogenannten Hochkrepps um 50 %. Zugfestigkeit und Dehnung sind so aufeinander abgestimmt, daß es problemlos gelingt, während der manuellen Applikation an der Außenkurve des Abdeckklebebands einen Teil der Dehnung ohne Rißgefahr herauszuziehen und dadurch eine Kurve zu erzeugen.

Im folgenden soll auf die üblichen Prozesse zur Herstellung von dehnfähigen bahnförmigen Papierträgern eingegangen werden.

Für Abdeckklebebänder werden üblicherweise als Trägermaterial maschinell gekreppte Papiere eingesetzt, die in der Regel aus 100 % Natronkraft-Zellstoff (NBSK) hergestellt werden. Im sogenannten Naßkrepp-Verfahren erfolgt die Kreppung meistens auf der Papiermaschine mit Hilfe eines Kreppschabers auf einem sogenannten Kreppzylinder entweder innerhalb bzw. am Ende der Pressenpartie oder auf einem der darauf folgenden Zylinder der Trockenpartie. Dabei wird durch Stauchung der noch feuchten und labilen Papierbahn an der Vorderkante des Kreppschabers eine Mikrofaltung des Papiers erzeugt. Dieser sehr sensible Verfahrensschritt begrenzt im allgemeinen die maximal mögliche Geschwindigkeit der Papiermaschine und verkürzt die Länge der Papierbahn um ca. 10 bis 20 %. Die Falten werden beim anschließenden Trocknungsprozeß in wesentlichen durch Ausbildung von Wasserstoffbrückenbindungen fixiert, so daß sie bei mäßiger mechanischer Beanspruchung des Papiers in Längsrichtung - wie sie zum Beispiel beim Abrollen und Ablängen eines Abdeckklebebands auftritt - stabil bleiben. Die Stabilität kann durch Zugabe von Leimungsmitteln noch erhöht, und so dem jeweiligen Anwendungszweck angepaßt werden. Sie wird üblicherweise durch Messen des Kraft-Dehnungs-Diagramms bestimmt. Nach diesem Verfahren lassen sich sogenannte Flachkrepps mit Reißdehnungswerten von bis zu 20 % erzeugen.

Ein weiteres Verfahren zur Herstellung von dehnbaren Papierträgern für Abdeckklebebänder ist das sogenannte CLUPAK-Verfahren. Dabei werden die Fasern im glatten Papier durch Friktion mit Hilfe eines sich entspannenden Gummituches oder gummibezogener Walzen in der Papierbahnebene gestaucht beziehungsweise gekräuselt. Man erhält so ein dehnfähiges Papier, dessen gekräuselte Fasern bei Zugbeanspruchung wieder gestreckt werden. Eine Mikrofaltung wie oben beschrieben ist nicht erkennbar; das Papier erscheint glatt und ist deshalb nicht als Krepp-Papier im eigentlichen Sinne anzusehen. Charakteristisch für die nach diesem Verfahren hergestellten Papiere ist eine bereits bei geringen Dehnungen sehr hohe Zugkraft, die im Bereich der Reißdehnung nur noch geringfügig ansteigt. Eine Anschmiegsamkeit von aus solchen Papieren hergestellten Abdeckklebebands an sphärische Oberflächen ist bei manueller Applikation deshalb kaum gegeben. Außerdem wird das Papier bedingt durch das Verfahren in z-Richtung stark verdichtet und nimmt deshalb während der in der Abdeckklebeband-Herstellung üblichen Imprägnierung nur schlecht Dispersionen auf. Üblicherweise werden deshalb für Abdeckklebebands geleimte Clupak-Träger ohne Imprägnierung eingesetzt. Die erzielten Dehnungen liegen ebenfalls bei bis zu 20 %. Zu diesem Verfahren und dem daraus hergestellten Produkt sei auf die DE 38 35 507 A1 verwiesen.

Für die Erzielung sehr hoher Dehnwerte von bis zu etwa 50 % wird im allgemeinen das Trockenkreppverfahren angewendet. Dabei wird ein glattes Papier auf einer separaten Maschine nach Wiederanfeuchten mit einer Bindemittellösung (Stärke, CMC, PVAI) wie oben beschrieben gekreppt und anschließend erneut getrocknet. Man erhält sogenannte Hochkrepps, die sich neben der extremen Dehnfähigkeit durch eine große Dicke und eine sehr rauhe Oberfläche auszeichnen.

Die nach unterschiedlichen Verfahren dehnfähig gemachten Papiere, aber auch ungekreppte Papiere können zur Erhöhung der Festigkeit und der Dichtigkeit mit wäßrigen Dispersionen synthetischer oder natürlicher Polymere oder deren Lösungen in organischen Lösemitteln getränkt und getrocknet (imprägniert), zur besseren Verankerung der Haftklebeschicht mit Primer beschichtet und zum Erreichen der Abrollbarkeit der Rollen mit einer Trennschicht auf der dem Primer gegenüberliegenden Seite versehen sein.

Auf das in einer der beschriebene Art und Weisen hergestellte Trägermaterial wird die Haftklebemasse beschichtet. Diese Beschichtung erfolgt zweckmäßigerweise auf die der Trennschicht gegenüberliegende Seite des Trägers, die ggf. mit einem Haftvermittler beschichtet sein kann. Für den Fall, daß eine Trennschicht nicht erforderlich ist kann die mit Haftkleber zu beschichtende Seite nach anderen Kriterien gewählt werden. Art und Zusammensetzung der in Frage kommenden Haftklebemassen sind bereits oben ausführlich entsprechend dem Stand der Technik beschrieben worden.

Zur Erfüllung der Anforderungen, insbesondere aber zur Verbesserung der Temperaturbeständigkeit ist es in einigen Anwendungsbereichen notwendig, die Klebemasse nach der Beschichtung auf das Trägermaterial und der gegebenenfalls notwendigen Trocknung zu vernetzen.

Neben chemischen Vernetzungsverfahren, auf die hier nicht näher eingegangen werden soll, kann die Vernetzung mit Elektronenstrahlen (ES), UV- oder IR-Strahlen erfolgen, sofern die Klebmasse dafür in geeigneter Weise zubereitet wurde.

Typische Bestrahlungsvorrichtungen, die bei der erfindungsgemäßen Ausgestaltung des Verfahrens zum Einsatz kommen, stellen Linearkathodensysteme, Scannersysteme beziehungsweise Multilängskathodensysteme dar, sofern es sich um Elektronenstrahlbeschleuniger handelt.

Die Beschleunigungsspannungen liegen im Bereich zwischen 40 kV und 350 kV, vorzugsweise 70 kV bis 300 kV. Die eingestrahlte Dosis bewegt sich zwischen 5 bis 150 kGy, insbesondere 10 bis 90 kGy. Dabei wird unter der Dosis diejenige Dosis verstanden, die auf der Oberfläche des bestrahlten Produktes gemessen wird; sie wird auch als Oberflächendosis bezeichnet.

Durch die richtige Konstruktion des Elektronenbeschleunigers und die richtige Wahl der Vernetzungsparameter Dosis und Beschleunigungsspannung ist dafür zu sorgen, daß einerseits die Haftklebemasse eine zum Erreichen der Temperaturbeständigkeit ausreichende Oberflächendosis von mehr als 5 kGy, aber nicht mehr als 150 kGy erhält und andererseits das strahlenempfindliche Trägermaterial mit der geringst möglichen Dosis belastet wird.

Das ist insbesondere dann der Fall, wenn die Beschleunigungsspannung, die Dicke des Titanfensters des Elektronenbeschleunigers und die Dicke des Luftspaltes zwischen Titanfolie und Klebmassenoberseite so gewählt wird, daß der Wert des Dosisabfalls zwischen der der Strahlungsquelle zugekehrten Oberfläche der Klebmasse und der ihr abgekehrten Oberfläche größer ist als 40 % des Wert der Dosis, die an der der Strahlungsquelle zugekehrten Oberfläche der Klebmasse einstrahlt, insbesondere aber größer 45 %.

Die erforderlichen Beschleunigungsspannungen sind abhängig von der Dicke der Haftklebemassenschicht und ihrer Dichte, sowie von der Konstruktion des Elektronenbeschleunigers selbst, insbesondere von der Dichte und der Dicke des Fenstermaterials, das das Vakuum des Elektronenbeschleunigers von der Außenatmosphäre trennt, sowie von Breite und Füllgas des Spaltes zwischen dem Fenster und der dem Fenster zugewandten Haftklebemassenoberfläche.

Überraschenderweise wird für Klebebänder, die nach der Anwendung rückstandsfrei entfernt werden sollen, eben die genannten Abdeck-Klebebänder, gefunden, daß auch bei einem erfindungsgemäßen Dosisabfall zwischen äußerer Oberfläche der Haftklebemasse und ihrer Grenzfläche zum Trägermaterial hin von größer 40 % die Funktion dieser Abdeck-Klebebänder nicht beeinträchtigt sondern im Gegenteil durch die Erfindung vorteilhaft beeinflußt wird. Das ist insbesondere deshalb der Fall, weil die Anwendung dieser Abdeckbänder einerseits mit relativ geringen Scherbelastungen verbunden ist, andererseits besondere Ansprüche an die Vernetzung der Klebmasseoberfläche und die Reißfestigkeit der Trägermaterialien gestellt werden. Nach einem erfindungsgemäßen Verfahren hergestellte Abdeck-Klebebänder weisen gegenüber dem Stand der Technik eine deutlich geringere Ausprägung von Belägen und Rückständen nach der Entfernung vom Untergrund auf, sie sind bei der Verklebung in Kurven und auf sphärischen Oberflächen dehnbarer und damit anschmiegsamer, sie zeigen bei der Entfernung vom Untergrund wesentlich seltener Abrisse und versagen dennoch überraschenderweise nicht durch Abscheren unter Scherbelastungen wie sie zum Beispiel unter der Eigenspannung eines gedehnt verklebten Papier-Trägers auftreten. Dies hängt damit zusammen, daß die erwähnten mechanischen Spannungen eines gedehnten gekreppten Papierträgers im allgemeinen geringer sind als die von gedehnten Folienträgern, da diese Papiere weniger elastisch sind.

Auf erfindungsgemäß dargestellte Weise werden Produkte erhalten,

- die durch die verfahrensgemäße, besonders schonende Art der Bestrahlung trotz einer guten Vernetzung der oberen Schicht der Haftklebmasse und einer demgegenüber um über 40 % geringeren Vernetzung der dem Träger zugewandten Grenzfläche der Haftklebmasse überraschenderweise in der Anwendung kein kohäsives Versagen, zum Beispiel durch Rückstandsbildung beim Entfernen der Produkte nach der Verklebung zeigen,

- deren den Elektronenstrahlen gegenüber empfindliche Träger aber durch die Elektronenstrahlung nur so gering geschädigt sind, daß sie erheblich weniger verringerte Höchstzugkräfte und Dehnungswerte sowie eine geringere Schädigung der gegebenenfalls auf der Rückseite vorhandenen Trennlackschicht aufweisen als nach dem bisherigen Stand der Technik bekannt war.

Umgekehrt kann bei gegebener akzeptabler Schädigung des Trägermaterials durch Elektronenstrahlvernetzung nach herkömmlicher Technologie die Vernetzung der obersten Haftklebmassenschichten deutlich erhöht werden, was den Einsatzbereich dieser Klebebänder hin zu höheren Anwendungstemperaturen stark erweitert.

Voraussetzung für ein rückstandsfreies Abziehverhalten erfindungsgemäß vernetzter Klebebänder ist eine schon im unvernetzten Zustand ausreichende Scherfestigkeit der Klebmasse, wie sie zum Beispiel durch Zusatz verstärkender Füllstoffe oder einen im Herstellungsprozeß besonders geringen Abbau des Elastomers erreicht werden kann. Die Anwendung des Verfahrens erfolgt deshalb bevorzugt zur Herstellung von Haftklebebändem, die keiner besonders hohen Scherbelastung ausgesetzt sind, also insbesondere Abdeckklebebändern.

Die überraschenden und besonders wünschenswerten Produkteigenschaften können darüber hinaus bei ungewöhnlich hohen Bahngeschwindigkeiten während der Vernetzung erreicht werden, indem beim erfindungsgemäßen Verfahren die auf der Klebebandrückseite abzuführende, durch die Rückseitendosis verursachte Wärmemenge besonders gering ist. Dadurch können bei gegebener Kühlleistung der dem Elektronenbeschleuniger gegenüberliegenden Kühlwalze höhere Bahngeschwindigkeiten erreicht werden, ohne daß es zu einer thermischen Schädigung des vernetzten Produktes kommt.

Ein weiterer Vorteil des erfindungsgemäßen Verfahrens besteht, wie aus der Veröffentlichung von Neuhaus-Steinmetz auf der RadTech Europe, Mediterraneo 1993, bekannt ist, darin, daß, weil die Dosisleistung von Elektronenquellen im beanspruchten Bereich der Beschleunigungsspannungen üblicherweise deutlich größer ist als bei höheren Beschleunigungsspannungen, auch dadurch bei gegebener Vernetzungsdosis und gegebenem Elektronenbeschleuniger höhere Bahngeschwindigkeiten erreicht werden können.

Schließlich umfaßt die Erfindung ein insbesondere einseitiges Klebeband, erhalten nach dem erfindungsgemäßen Verfahren.

Im folgenden sollen erfindungsgemäße Verfahren sowie nach dem erfindungsgemäßen Verfahren hergestellte Klebebänder anhand von mehreren Beispielen erläutert werden, ohne die Erfindung damit allerdings unnötig einschränken zu wollen.

**Beispiele**

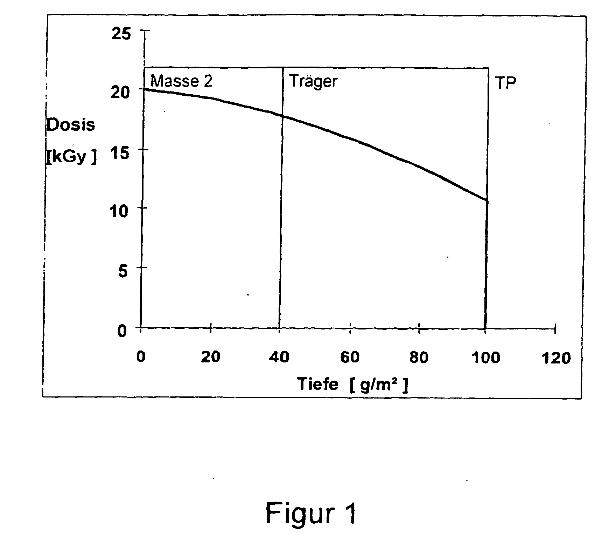

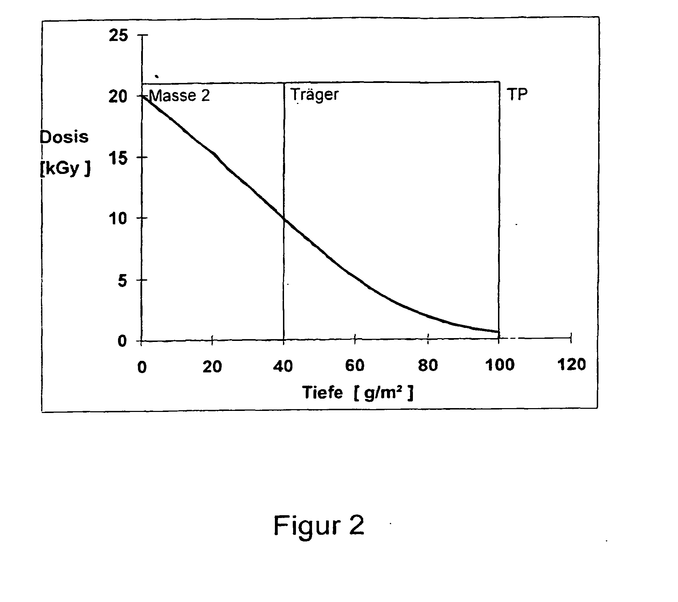

Der Unterschied in den Tiefendosisprofilen eines für Krepp-Abdeckbänder typischen Produktaufbaues aus 40 g/m$^2$ Haftklebmasse und 60 g/m$^2$ imprägniertem und mit Trennlack beschichtetem Krepp-Papier wird in den Figuren 1 und 2 verdeutlicht.

In der Figur 1 ist eine Beschleunigungsspannung von 150 kV sowie eine Dosis von 20 kGy eingestellt, in der Figur 2 lauten die Werte 110 kV und 20 kGy.

Durch die um 40 kV geringere Beschleunigungsspannung wird bei identischer Oberflächendosis der Dosisabfall in der Klebmasse von ca. 10 % auf ca. 50 % erhöht und damit die schädigende mittlere Trägerdosis wirksam von ca. 14 kGy auf unter 5 kGy reduziert.

Die in den Produkteigenschaften nachweisbaren Effekte eines erfindungsgemäßen, 40 % überschreitenden Dosisabfalles in der Haftklebemasse werden in den Beispielen 1 bis 10 illustriert.

Produktaufbau:

- 40 g/m$^2$ Haftklebmasse auf Basis Naturkautschuk,
- 60 g/m$^2$ Krepp-Träger, imprägniert und mit Trennschicht beschichtet

Tabelle 1:

| | Oberflächendosis | Beschleunigungsspannung | Dosisabfall in der Klebmasse* | Mittlere Trägerdosis* | Höchstzugkraft | Reißdehnung |
|---|---|---|---|---|---|---|
| Beispiele 1 bis 10 | | | | | | |
| | [kGy] | [kV] | [ %] | [kGy] | [N/cm] | [%] |
| 1. | 20 | 180 | 2 | 18 | 45,5 | 10,7 |
| 2. | 20 | 160 | 7 | 16 6 | 46,0 | 11,0 |
| 3. | 20 | 140 | 17 | 13 | 46,8 | 11,5 |
| 4. | 20 | 130 | 25 | 9 | 47,4 | 12,0 |
| 5. | 20 | 118 | 40 | 6 | 48,2 | 12,4 |
| 6. | 20 | 110 | 55 | 4 | 49,0 | 12,7 |
| 7. | 20 | 100 | 76 | 2 | 50,8 | 13,0 |
| 8. | 15 | 100 | 76 | 1,5 | 51,3 | 13,1 |
| 9. | 10 | 100 | 76 | 1 | 51,7 | 13,1 |
| 10. | 5 | 100 | 76 | 0,5 | 52,0 | 13,2 |
| 11. | 0 | 0 | 0 | 0 | 52,5 | 13,3 |

* = berechnet

Muster eines unvernetzten Haftklebebandes mit Krepp-Träger wurden bei verschieden Einstellungen durch Elektronenstrahlung vernetzt. Anhand der vernetzten Muster wurde untersucht, in wie weit die Bestrahlungsbedingungen Einfluß auf die mechanische Festigkeit des Haftklebebandes hat.

Aus Tabelle 1 ist ersichtlich, wie die mittlere Trägerdosis mit der Oberflächendosis und der Beschleunigungsspannung zunimmt. Während durch physikalische Gesetzmäßigkeiten die mittlere Trägerdosis bei sehr hohen (> 160 kV) und sehr niedrigen (< 110 kV) Beschleunigungsspannungen relativ spannungsunabhängig ist, ist sie im mittleren Spannungsbereich sehr spannungsabhängig.

Die Beispiele 1 bis 10 zeigen, daß dies nicht nur für die mittlere Trägerdosis, sondern gleichermaßen auch für die mechanische Festigkeit und Dehnbarkeit des Trägers gilt. Um die Festigkeit zu konservieren, muß deshalb bei Beschleunigungsspannungen gearbeitet werden, die in der Klebmasse einen Dosisabfall von über 40 % hervorrufen. Dann ist die mittlere Trägerdosis so gering, daß die verbleibende Schädigung des Trägermaterials die Funktion des Klebebandes nicht wesentlich beeinträchtigt.

Produktaufbau:

- 40g/m$^2$ Haftklebmasse auf Basis Naturkautschuk,
- 60 g/m$^2$ Krepp-Träger, imprägniert und mit Trennschicht beschichtet

Tabelle 2:

| Beispiele 11 bis 20 | | | | | |
|---|---|---|---|---|---|
| | Oberflächen dosis | Beschleunigungsspannung | Dosisabfall in der Klebmasse | Klebmasse-Rückstände** | Rückstände nach Temperaturbelastung* |
| | [kGy] | [kV] | [%] | [%] | [%] |
| 12. | 20 | 180 | 2 | 0 | 0 |
| 13. | 20 | 160 | 7 | 0 | 0 |
| 14. | 20 | 140 | 17 | 0 | 0 |
| 15. | 20 | 130 | 25 | 0 | 0 |
| 16. | 20 | 118 | 40 | 0 | 0 |
| 17. | 20 | 110 | 55 | 0 | 0 |
| 18. | 20 | 100 | 76 | 0 | 0 |
| 19. | 15 | 100 | 76 | 0 | 3 |
| 20. | 10 | 100 | 76 | 0 | 7 |
| 21. | 5 | 100 | 76 | 0 | 12 |
| 22. | 0 | 0 | 0 | 0 | 20 |

** nach 24 h auf lackiertem Stahlblech

* nach 1 h 80 °C auf lackiertem Stahlblech

Die Muster aus Beispiel 1 bis 10 wurden auf lackierte Stahlbleche verklebt und nach 24 h bei Raumtemperatur bzw. 1 h bei 100 °C abgezogen. Damit soll der Einfluß der Vernetzungsbedingungen auf die Rückstandsausbildung gezeigt werden.

Tabelle 2 belegt, daß die Haftklebemasse bei Raumtemperatur auch im unvernetzten Zustand rückstandsfrei entfernbar ist. Nach 1 h 80 °C zeigt sie allerdings für ein Abdeckklebeband unakzeptable Klebmasserückstände und ist damit zum Beispiel in der Reparaturlackierung von PKWs nicht einsetzbar Dem kann durch das erfindungsgemäße Vernetzungsverfahren entgegengewirkt werden, ohne daß die mechanische Belastbarkeit des Trägermaterials wesentlich beeinträchtigt wird (siehe Tabelle 1). Intensivere als die erfindungsgemäßen Bestrahlungsbedingungen stellen also eine für die Leistungsfähigkeit der Haftklebmasse überflüssige und für den Träger schädliche Belastung dar.

**Patentansprüche**

1. Verfahren zur Herstellung von Klebebändern, wobei ein mit einer Klebmasse beschichtetes Klebeband einer strahlenchemischen Vernetzung, insbesondere Elektronenstrahlvernetzung, unterworfen wird, indem die Bestrahlung derartig erfolgt, daß die Bestrahlung von der mit Haftklebemasse beschichteten Seite aus erfolgt, wobei die Beschleunigungsspannung während der Bestrahlung so gewählt wird, daß der Wert des Dosisabfalls zwischen der der Strahlungsquelle zugekehrten Oberfläche der Klebemasse und der ihr abgekehrten Oberfläche größer ist als 40 % des Wertes der Dosis, die an der der Strahlungsquelle zugekehrten Oberfläche der Klebemasse einstrahlt.

2. Verfahren nach Anspruch 1, **dadurch gekennzeichnet, daß** die Klebmassen aus mindestens einem insbesondere durch Elektronenstrahlen vernetzbaren Elastomer bestehen wie Acrylaten, Silikonelastomeren, Naturkautschuksystemen, Styrolblockcopolymeren wie Styrol-Butadien-Styrol, Styrol-lsopren-Styrol oder Styrol-Ethylen-Butylen-Styrol, gegebenenfalls in Kombination mit Tackifiern.

3. Verfahren nach den Ansprüchen 1 oder 2, **dadurch gekennzeichnet, daß** die Klebmassen gefüllt, gefärbt und/oder geschäumt sind.

4. Verfahren nach zumindest einem der Ansprüche 1 bis 3, **dadurch gekennzeichnet, daß** als Trägermaterialien Folien und/oder Vliese auf Basis PVC, PP, PE, Polyester oder anderen üblichen Copolymeren oder cellulosehaltige Materialien wie Papiere oder Baumwollgewebe, -gewirke, -vliese eingesetzt sind.

5. Verfahren nach zumindest einem der vorherigen Ansprüche, **dadurch gekennzeichnet, daß** das Trägermaterial ein Flächengewicht von 12 bis 250 g/m$^2$ und mehr, vorzugsweise 12 bis 150 g/m$^2$ und ganz besonders bevorzugt von 12- 100 g/m$^2$, aufweist.

6. Verfahren nach zumindest einem der vorherigen Ansprüche, **dadurch gekennzeichnet, daß** die Klebemasse mit einem Flächengewicht von 10 bis 200 g/m$^2$, bevorzugt von 30 bis 120 g/m$^2$ und ganz bevorzugt von 30 bis 60 g/m$^2$, auf das Trägermaterial aufgetragen ist.

7. Insbesondere einseitiges Klebeband, erhalten nach einem Verfahren gemäß zumindest einem der vorherigen Ansprüche.

8. Verwendung eines Klebebands nach zumindest einem der vorherigen Ansprüche als Abdeckband.

**Claims**

1. Process for producing adhesive tapes in which an adhesive tape coated with an adhesive is subjected to radiation-chemical crosslinking, especially electron beam crosslinking, irradiation taking place from the side coated with pressure-sensitive adhesive, the acceleration voltage during irradiation being chosen so that the amount of the drop in dose between the adhesive surface facing the radiation source and the surface turned away from it is greater than 40% of the level of dose irradiated on the adhesive surface facing the radiation source.

2. Process according to Claim 1, **characterized in that** the adhesives are composed of at least one elastomer, in particular an electron-beam crosslinkable elastomer, such as acrylates, silicone elastomers, natural rubber systems, styrene block copolymers such as styrene-butadiene-styrene, styrene-isoprene-styrene or styrene-ethylene-butylene-styrene, where appropriate in combination with tackifiers.

3. Process according to Claim 1 or 2, **characterized in that** the adhesives are filled, coloured and/or foamed.

4. Process according to at least one of Claims 1 to 3, **characterized in that** films and/or nonwovens based on PVC, PP, PE, polyester or other customary copolymers of cellulosic materials such as papers or cotton wovens, knits or nonwovens are used as backing materials.

5. Process according to at least one of the above claims, **characterized in that** the backing material has a basis weight of from 12 to 250 g/m$^2$ or more, preferably from 12 to 150 g/m$^2$, and, with very particular preference, from 12 to 100 g/m$^2$.

6. Process according to at least one of the above claims, **characterized in that** the adhesive is applied to the backing material with a weight per unit area of from 10 to 200 g/m$^2$, preferably from 30 to 120 g/m$^2$, and, very preferably from 30 to 60 g/m$^2$.

7. Adhesive tape, especially a single-sided adhesive tape, obtained by a process according to at least one of the above claims.

8. Use of an adhesive tape according to at least one of the above claims as a masking tape.

**Revendications**

1. Procédé en vue de la fabrication de bandes adhésives, une bande adhésive revêtue d'une masse adhésive étant soumise à une réticulation par modification chimique sous l'effet d'un rayonnement, en particulier à un réticulation par rayonnement d'électrons, en ce que l'irradiation a lieu de telle manière que l'irradiation se fasse sur la face revêtue de masse adhésive de contact, la tension d'accélération pendant l'irradiation étant choisie de telle sorte que la valeur de la chute de dose entre la surface, tournée vers la source de rayonnement, de la masse adhésive et la surface qui est opposée à cette dernière est supérieure à 40% de la valeur de la dose, qui irradie la surface, tournée vers la source de rayonnement, de la masse adhésive.

2. Procédé selon la revendication 1, **caractérisé en ce que** les masses adhésives sont constituées d'au moins un élastomère réticulable, en particulier par un rayonnement d'électrons, comme des acrylates, des élastomères de silicone, des systèmes de caoutchouc naturel, des copolymères séquencés de styrène, comme le styrène-butadiène-styrène, le styrène-isoprène-styrène ou le styrène-éthylène-butylène-styrène, le cas échéant, en combinaison à des agents poisseux.

3. Procédé selon les revendications 1 ou 2, **caractérisé en ce que** les masses adhésives sont chargées, colorées et/ou mises sous la forme de mousses.

4. Procédé selon au moins l'une des revendications 1 à 3, **caractérisé en ce que** l'on utilise, en tant que matériaux de support, des feuilles et/ou des non tissés à base de PVC, de PP, de PE, de polyesters ou d'autres copolymères usuels ou d'autres matériaux contenant de la cellulose, comme des papiers ou des tissés, des tricots, des non tissés en coton.

5. Procédé selon au moins l'une quelconque des revendications précédentes, **caractérisé en ce que** le matériau de support présente un grammage de 12 à 250 g/m$^2$ ou plus, de préférence, de 12 à 150 g/m$^2$ et, tout particuliè-rement, de préférence, de 12 à 100 g/m$^2$.

6. Procédé selon au moins l'une quelconque des revendications précédentes, **caractérisé en ce que** la masse adhésive est appliquée sur le matériau de support à raison d'un grammage de 10 à 200 g/m$^2$, de préférence, de 30 à 120 g/m$^2$ et, tout particulièrement, de préférence, de 30 à 60 g/m$^2$.

7. Bande adhésive, en particulier, à une face, obtenue conformément à un procédé selon au moins l'une des revendications précédentes.

8. Utilisation d'une bande adhésive selon au moins l'une des revendications précédentes en tant que bande de re-couvrement.

Figur 1

Figur 2